# EUROPÄISCHE PATENTSCHRIFT

(11) **EP 3 788 609 B1**
(45) Veröffentlichungstag und Bekanntmachung des Hinweises auf die Patenterteilung: **12.03.2025**
(21) Anmeldenummer: 19714127.8
(22) Anmeldetag: 14.03.2019
(51) Int. Cl.: G08G 1/0967, G08G 1/16, B60W 30/08, B60W 40/00, B60W 30/18

(54) **VERFAHREN UND VORRICHTUNG ZUR ERZEUGUNG EINES EINEN ÜBERHOLVORGANG EINES KRAFTFAHRZEUGS BEEINFLUSSENDEN SIGNALS**
METHOD AND DEVICE FOR GENERATING A SIGNAL INFLUENCING AN OVERTAKING MANOEUVRE OF A MOTOR VEHICLE
PROCÉDÉ ET DISPOSITIF DE GÉNÉRATION D'UN SIGNAL INFLUANT SUR UN PROCESSUS DE DÉPASSEMENT D'UN VÉHICULE AUTOMOBILE

(30) Priorität: 22.03.2018 DE 102018204380
(43) Veröffentlichungstag der Anmeldung: 10.03.2021
(73) Patentinhaber: Robert Bosch GmbH, 70442 Stuttgart (DE)
(72) Erfinder: HOGSAESS, Felix Kouki, 70736 Fellbach (DE)
(86) Internationale Anmeldenummer: PCT/EP2019/056427
(87) Internationale Veröffentlichungsnummer: WO 2019/179875

(56) Entgegenhaltungen:
- DE-A1- 102004 027 432
- DE-A1- 102010 008 079
- DE-A1- 102016 209 678
- DE-A1- 19 705 635

## Beschreibung

Die vorliegende Erfindung betrifft ein Verfahren und eine Vorrichtung zur Erzeugung eines einen Überholvorgang eines Kraftfahrzeugs beeinflussenden Signals mit den Merkmalen der unabhängig formulierten Ansprüche.

### Stand der Technik

Überholt ein leichteres Fahrzeug wie beispielsweise ein Zweiradfahrzeug ein größeres Fahrzeug, so fährt das überholende Fahrzeug während des Überholvorgangs seitlich an dem überholten Fahrzeug vorbei. Während des Überholvorgangs ist das überholende Fahrzeug von dem parallel fahrenden überholten Fahrzeug vom seitlichem Wind meist komplett abgeschottet und nur noch dem Fahrtwind ausgesetzt.

Dieser Effekt ist beispielsweise sehr groß, wenn ein Zweiradfahrzeug einen Lastwagen überholt. Tritt das überholende Fahrzeug allerdings zum Abschluss des Überholvorgangs wieder aus dem Windschatten aus, so können unvorhergesehene Böen das überholende Fahrzeug erfassen. Sollte der Zweiradfahrer nun sein Zweirad nicht mehr stabil halten können, so kann es im Falle eines Sturzes, beispielsweise bei höheren Geschwindigkeiten auf einer Autobahn, unabhängig von der Verkehrsdichte zu erheblichen Verletzungen oder gar tödlichen Unfällen kommen.

Zu Reduzierung dieses Risikos sind keine wirksamen Warnsysteme für das Austreten aus dem Windschatten bekannt. Das heißt, dass bisher der Zweiradfahrer in solchen Windsituationen und dem damit verbundenen Austreten aus dem Windschatten auf sich allein gestellt ist.

Das Dokument DE 10 2016 209678 offenbart ein Verfahren für einen Überholvorgang unter Berücksichtigung der Windstärke.

### Offenbarung der Erfindung

Die Erfindung betrifft ein Verfahren mit den Merkmalen des Anspruchs 1 zur Erzeugung eines einen Überholvorgang eines ersten Kraftfahrzeugs beeinflussenden Signals und eine entsprechende Vorrichtung gemäß Anspruch 7.

Beim Überholen eines zweiten Kraftfahrzeugs durchfährt das erste Kraftfahrzeug einen Überholraum. Dabei erstreckt sich der Überholraum wenigstens in Fahrtrichtung des zweiten Kraftfahrzeugs seitlich. Der Rand des Überholraums liegt dann im Bereich des Austritts des überholenden ersten Kraftfahrzeugs aus dem Überholraum.

Das Durchfahren des Überholraumes kann mittels eines GPS und/oder mittels eines am ersten Kraftfahrzeug angebrachten Windsensors erfasst werden.

Wie bereits eingangs erwähnt ist das erste Kraftfahrzeug vorteilhafterweise ein einspuriges Kraftfahrzeug. Abhängig von dem erfindungsgemäß erzeugten Signal ist vorgesehen, dass eine für den Fahrer des ersten Kraftfahrzeugs wahrnehmbare Signalwirkung erzeugt wird. Dies kann zum Beispiel durch eine leichte Vibration am Griff des Zweirads oder am Helm des Fahrers geschehen. Ebenso wäre eine Einblendung im Tachometer denkbar.

Das Windsignal repräsentiert die Windgeschwindigkeit im Wesentlichen quer zur

Fahrtrichtung der Kraftfahrzeuge, also den Seitenwind. Erfindungsgemäß ist die

Erfassung der Windgeschwindigkeit in dem in Fahrtrichtung vorderen Bereich des überholten Fahrzeugs.

Erfindungsgemäß wird das Signal dann erzeugt, wenn das Windsignal einen Minimalwert und/oder in vorgebbarer Weise einen Trend zu Minimalwerten aufweist.

In einer weiteren besonders bevorzugten Ausführungsform der Erfindung ist vorgesehen, dass dem zweiten überholten Kraftfahrzeug wenigstens ein drittes Kraftfahrzeug vorausfährt. Das empfangene Windsignal wird dann wenigstens auch an diesem dritten Kraftfahrzeug gemessen. Gemäß dieser Ausführungsform werden die am zweiten und dritten Kraftfahrzeug, und gegebenenfalls an weiteren vor dem dritten Fahrzeug fahrenden Fahrzeugen, gemessenen Windsignale zur Erzeugung des Signals in vorgebbarer Weise verglichen. Hierdurch wird die Zuverlässigkeit des am überholten Fahrzeug gemessenen Windsignals erhöht.

Besonders vorteilhaft ist es, dass die am zweiten und dritten Kraftfahrzeug, und gegebenenfalls an weiteren vor dem dritten Fahrzeug fahrenden Fahrzeugen, gemessenen Windsignale zur Erzeugung des Signals bezogen auf einen vorgebbaren Ort verglichen werden. Dieser Ort sollte dann der Ort sein, an dem das erste Kraftfahrzeug das zweite Kraftfahrzeug frühestmöglich passieren kann. Das heißt der Ort, an dem das erste Fahrzeug aus dem Windschatten des zweiten Fahrzeugs frühestmöglich herausgetreten wird. Dieser Ort wird vorteilhafterweise unter Berücksichtigung der maximal erlaubten und/oder zu realisierenden Längsgeschwindigkeit und/oder der aktuell gefahrenen Längsgeschwindigkeit des ersten Kraftfahrzeugs bestimmt.

Besonders vorteilhaft ist es, wenn bei der Bestimmung des frühestmöglichen Überholzeitpunkts nicht als einen der Faktoren die maximal zulässige Geschwindigkeit einbezogen wird, sondern die aktuell gefahrene (Realgeschwindigkeit). Hintergrund ist, dass man sonst davon ausgehen würde, dass der Motorradfahrer immer mit der maximal zulässigen Geschwindigkeit fährt.

Zusätzlich muss auch die Geschwindigkeit des zu überholenden Kraftfahrzeugs empfangen werden um eine Differenzgeschwindigkeit zwischen dem überholenden und dem zu überholenden Kraftfahrzeugs auszurechnen und damit den frühestmöglichen Überholzeitpunkt zu bestimmen. Zusätzlich muss auch die Länge des zu überholenden Kraftfahrzeugs empfangen werden, um zu wissen, wann das zu überholende Kraftfahrzeug vom überholenden Kraftfahrzeug passiert ist und man aus dem Windschatten austritt.

Das Signal wird bei dieser Ausgestaltung erfindungsgemäß dann erzeugt, wenn die am zweiten und dritten oder weiteren Kraftfahrzeug gemessenen Windsignale an diesem Ort Minimalwerte und/oder den gemeinsamen Trend zu Minimalwerten aufweisen.

Die Erfindung setzt das Empfangen eines Windsignals voraus. Das heißt, dass dies in der Regel mittels eines am zu überholenden Kraftfahrzeug (meist ein Lastkraftwagen) angebrachten Windsensors erreicht wird. Solche Winddaten können ebenfalls für eine Brückenüberfahrung von Lastkraftwagen interessant sein. Ist der Wind zu stark dürfen Lastkraftwagen für gewöhnlich über bestimmte Brücken nicht mehr fahren. Diese Einschätzung, ob die Brücke für Lastkraftwagen bei den aktuellen Windverhältnissen noch zu befahren ist kann in Zukunft dann durch solche "Live Winddaten" von Lastkraftwagen (welche die Brücke soeben überquert haben) gestützt oder sogar vollständig entschieden werden.

Weitere vorteilhafte Ausgestaltungen der Erfindung sind den Unteransprüchen und dem Ausführungsbeispiel zu entnehmen.

### Zeichnungen

Ausführungsbeispiele der Erfindung werden anhand der Zeichnungen und der nachfolgenden Beschreibung näher erläutert. Es zeigen:
- Figur 1: eine schematische Darstellung einer Überholsituation
- Figur 2: eine schematische Darstellung der Windverhältnisse
- Figur 3: ein Ablaufdiagramm

### Ausführungsformen der Erfindung

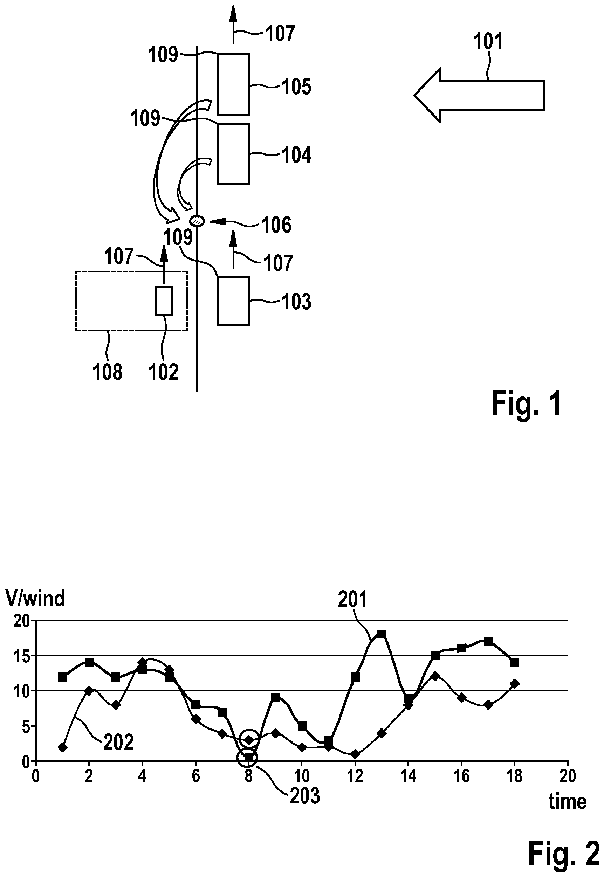

Figur 1 zeigt eine schematische Darstellung einer Überholsituation. Dabei überholt das erste Fahrzeug 102 das zweite Fahrzeug 103 und durchfährt dabei den Überholraum 108. Das zweite Fahrzeug ist in diesem Ausführungsbeispiel ein Lastkraftwagen und das erste Fahrzeug ein einspuriges Fahrzeug.

Vor dem zweiten Fahrzeug 103 fahren weitere Fahrzeuge 104 und 105 in dieselbe Fahrtrichtung 107. Alle Fahrzeuge sind mehr oder weniger dem Seitenwind 101 ausgesetzt. Das erste Fahrzeug 102 ist dabei dem Seitenwind 101 weniger ausgesetzt während es sich im Windschatten des zweiten Fahrzeugs 103 befindet. Auch das dritte und vierte Fahrzeug 104 und 105 sind in diesem Ausführungsbeispiel Lastkraftwagen, die eine im Verhältnis zur Aufbauhöhe des ersten Fahrzeugs 102 große Aufbauhöhe aufweisen.

An den in Fahrtrichtung vorderen Enden der LKW-Aufbauten (z.B.: der LKWPlanen) werden Windgeschwindigkeitssensoren 109 angebracht. Diese sammeln kontinuierlich in so kurzen Intervallen wie möglich die Windgeschwindigkeitsdaten, insbesondere die Daten zum Seitenwind 101, und werten sie, beispielsweise innerhalb von Diagrammen, aus.

Getreu nach dem Motto "The trend is your friend" wird sobald eine mögliche Spitze der Windgeschwindigkeit überwunden wurde und die Windgeschwindigkeit für eine bestimmte Anzahl an Intervallen kontinuierlich abnimmt, per Car-to-Car Kommunikation an das überholende Fahrzeug 102, beispielweise an das Motorrad 102 (beziehungsweise den Fahrer), übermittelt, dass nun der geeignete Moment gekommen ist, um aus dem Windschatten (im Bereich des in Fahrtrichtung vorderen Ende des Überholraums 108) auszutreten. Diese Übermittlung kann zum Beispiel durch eine leichte Vibration am Griff des Motorrades oder am Helm des Fahrers geschehen. Ebenso wäre eine Einblendung im Tachometer denkbar.

Abhängig von den durch den Windsensor 109 gemessenen fortlaufenden Winddaten des LKWs 103, neben welchem sich das Motorrad bewegt, wird eine Trendfunktion für die Stelle 106 berechnet, an welcher das Motorrad unter Einhaltung der vorgegebenen Maximalgeschwindigkeit oder unter Einhaltung der aktuell gefahrenen Geschwindigkeit (Realgeschwindigkeit), dem vorausfahrenden Verkehr sowie der Geschwindigkeit des nebenfahrenden LKW 103 frühestens aus dem Windschatten des Fahrzeugs 103 austreten könnte. Durch die an dieser Stelle 106 durch andere LKWs 104 und 105 bereits übermittelten Winddaten kann eine weitere Absicherung mit Bezug auf das Austreten aus dem Windschatten geschehen.

Ziel ist es, nur dann ein Signal an den Fahrer des überholenden Fahrzeugs 102 zu senden, wenn die dynamische Windfunktion (des zu überholenden LKWs 103) sowie die statische Windfunktion (der vorausfahrenden Fahrzeuge 104 und 105) an dem Streckenpunkt 106, an dem am frühesten überholt werden kann, beide den gleichen Trend zu abnehmender Windgeschwindigkeit aufzeigen. Dies kann beispielsweise durch vier Zeitintervalle in Folge abflachende Windgeschwindigkeit geschehen. Dies ist anhand der Figur 2 gezeigt.

Die Figur 2 zeigt mit dem Bezugszeichen 202 den zeitlichen Verlauf des am Fahrzeug 103 mit dem dort angebrachten Sensor 109 gemessenen Seitenwind V/wind 101 (dynamische Windgröße). Mit dem Bezugszeichen 201 ist der zeitliche Verlauf des Seitenwindes 101 am Ort 106 gezeigt. Dieser Verlauf 201 wird abhängig von den an den Fahrzeugen 104 und/oder 105 angebrachten Windsensoren 109 ermittelt (statische Windgröße).

In diesem Ausführungsbeispiel wird das Überholsignal dann generiert, wenn
- das dynamische Windsignal 202 während einer Zeitdauer von vier Zeitintervallen in Folge abflacht und
- das statische Windsignal 201 (am Ort 106) zumindest ein relatives Minimum aufweist.

Dann wird zu diesem Zeitpunkt 203 das Überholsignal generiert.

Somit ist gewährleistet, dass das System trotz der Methode der Trendanalyse eine gute Verlässlichkeit erreichen kann.

In der anhand der Figur 2 gezeigten Ausführungsform wird beispielhaft das Signal um aus dem Windschatten auszutreten beim vierten aufeinanderfolgenden Intervall, in dem die Windgeschwindigkeit abfällt (Zeitpunkt 203) gesendet. Diese Anzahl an Intervallen kann je nach Wetterlage variieren. Hierzu kann erfindungsgemäß über längere Zeit analysiert werden, in welchen Intervallen Höhepunkte oder Tiefpunkte an diesem Tag/Stunde/Minute durchschnittlich erfolgen (an beiden Punkten: dynamisch (fahrender LKW) und am frühestmöglichen Überholzeitpunkt).

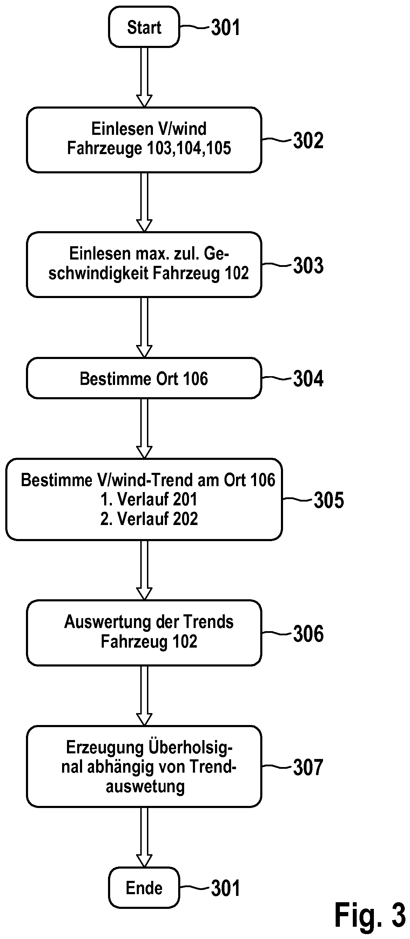

Anhand der Figur 3 wird eine Ausführungsform der Erfindung dargestellt.

Nach dem Startschritt 301 werden im Schritt 302 die mittels der Sensoren 109 gemessenen Windgeschwindigkeiten der Fahrzeuge 103, 104 und 105 eingelesen. Im Schritt 303 wird die maximale und/oder maximale zulässige Geschwindigkeit des überholenden Fahrzeugs 102 eingelesen; diese kann auch durch die momentane Verkehrs- und/oder Wettersituation beeinflusst werden.

Im Schritt 304 wird dann aus den im Schritt 303 eingelesenen Daten der Ort 106 bestimmt, an dem das überholende Fahrzeug 102 frühestmöglich aus dem Windschatten des überholten Fahrzeugs 103 heraustreten kann.

Im Schritt 305 werden die anhand der Figur 2 gezeigten Verläufe 201 und 202 ermittelt, wonach dann im Schritt 306 die anhand der Figur 2 dargestellte Ermittlung des Zeitpunktes 203 stattfindet.

Nachdem dann im Schritt 307 das Überholsignal zum Zeitpunkt 203 generiert worden ist, wird zum Endschritt 301 übergegangen.

## Patentansprüche

1. Verfahren zur Erzeugung eines einen Überholvorgang eines ersten Kraftfahrzeugs (102) beeinflussenden Signals, wobei das erste Kraftfahrzeug (102) ein zweites Kraftfahrzeug (103) mittels Durchfahren eines Überholraums (108), welcher sich wenigstens in Fahrtrichtung des zweiten Kraftfahrzeugs (103) seitlich erstreckt, überholt, mit den Schritten:
• Empfangen wenigstens eines Windsignals, das die Windgeschwindigkeit (101) im Wesentlichen quer zur Fahrtrichtung des ersten Kraftfahrzeugs (102) an einem in Fahrtrichtung vorderen Rand des Überholraums (108) repräsentiert (Schritt 302) und wenigstens am zweiten Kraftfahrzeug (103) gemessen wird,
• Erzeugung des Signals wenigstens abhängig von dem empfangenen Windsignal (Schritt 307),
wobei in Abhängigkeit des erzeugten Signals eine durch einen Fahrer des ersten Kraftfahrzeugs (102) wahrnehmbare Signalwirkung erzeugt wird, mittels welcher dem Fahrer ein geeigneter Zeitpunkt für einen Austritt aus einem Windschatten des zweiten Kraftfahrzeugs am Rand des Überholraums (108) übermittelt wird **dadurch gekennzeichnet, dass**
das Signal dann erzeugt wird, wenn das Windsignal einen Minimalwert und/oder in vorgebbarer Weise einen Trend zu Minimalwerten aufweist.

2. Verfahren nach Anspruch 1, **dadurch gekennzeichnet, dass** das Durchfahren des Überholraumes (108) mittels eines GPS und/oder mittels eines am ersten Kraftfahrzeug (102) angebrachten Windsensors erfasst wird.

3. Verfahren nach einem der voranstehenden Ansprüche, **dadurch gekennzeichnet, dass** dem zweiten Kraftfahrzeug (103) wenigstens ein drittes Kraftfahrzeug (104, 105) vorausfährt und wenigstens ein zweites empfangene Windsignal wenigstens am dritten Kraftfahrzeug (104, 105) gemessen wird.

4. Verfahren nach Anspruch 3 **dadurch gekennzeichnet, dass** die am zweiten und dritten Kraftfahrzeug (103, 104, 105) gemessenen Windsignale zur Erzeugung des Signals in vorgebbarer Weise verglichen werden.

5. Verfahren nach Anspruch 4, **dadurch gekennzeichnet, dass** die am zweiten und dritten Kraftfahrzeug (103, 104, 105) gemessenen Windsignale zur Erzeugung des Signals bezogen auf einen vorgebbaren Ort (106) verglichen werden (Schritt 306).

6. Verfahren nach Anspruch 5, **dadurch gekennzeichnet, dass** der Ort (106) als Ort, an dem das erste Kraftfahrzeug (102) das zweite Kraftfahrzeug (103) frühestmöglich passieren kann, vorgegeben ist, wobei insbesondere vorgesehen ist, dass der Ort (106) unter Berücksichtigung
• der maximal erlaubten und/oder zu realisierenden Längsgeschwindigkeit des ersten Kraftfahrzeugs (102) und/oder
• der aktuell von dem ersten Kraftfahrzeug (102) gefahrenen Geschwindigkeit bestimmt wird (Schritt 304).

7. Vorrichtung zur Erzeugung eines einen Überholvorgang eines ersten Kraftfahrzeugs (102) beeinflussenden Signals, wobei das erste Kraftfahrzeug (102) ein zweites Kraftfahrzeug (103) mittels Durchfahren eines Überholraums (108), welcher sich wenigstens in Fahrtrichtung des zweiten Kraftfahrzuegs (103) seitlich erstreckt, überholt, mit
• einer Empfangseinheit zum Empfangen wenigstens eines Windsignals, das die Windgeschwindigkeit (101) im Wesentlichen quer zur Fahrtrichtung des ersten Kraftfahrzeugs (102) an einem in Fahrtrichtung vorderen Rand des Überholraums repräsentiert und wenigstens am zweiten Kraftfahrzeug (103) gemessen wird,
• einer Erzeugungseinheit zum Erzeugung des Signals wenigstens abhängig von dem empfangenen Windsignal,
wobei die Vorrichtung dazu ausgebildet ist, in Abhängigkeit des erzeugten Signals eine durch einen Fahrer des ersten Kraftfahrzeugs (102) wahrnehmbare Signalwirkung zu erzeugen, mittels welcher dem Fahrer ein geeigneter Zeitpunkt für einen Austritt aus einem Windschatten des zweiten Kraftfahrzeugs (103) am Rand des Überholraums (108) übermittelt wird, **dadurch gekennzeichnet, dass** das Signal dann
erzeugt wird, wenn das Windsignal einen Minimalwert und/oder in vorgebbarer Weise einen Trend zu Minimalwerten aufweist.

8. Vorrichtung nach Anspruch 7, **dadurch gekennzeichnet, dass** dem zweiten Kraftfahrzeug (103) wenigstens ein drittes Kraftfahrzeug (103, 104, 105) vorausfährt und mindestens ein zweites empfangene Windsignal wenigstens am dritten Kraftfahrzeug (103, 104, 105) gemessen wird.

9. Vorrichtung nach Anspruch 8, **dadurch gekennzeichnet, dass** die am zweiten und dritten Kraftfahrzeug (103, 104, 105) gemessenen Windsignale zur Erzeugung des Signals verglichen werden, wobei insbesondere vorgesehen ist, dass die am zweiten Kraftfahrzeug (103) gemessenen Windsignale zur Erzeugung des Signals mit den am dritten Kraftfahrzeug (104, 105) gemessenen Windsignalen bezogen auf einen vorgebbaren Ort (106) verglichen werden.

## Claims

1. Method for generating a signal influencing an overtaking manoeuvre of a first motor vehicle (102), wherein the first motor vehicle (102) overtakes a second motor vehicle (103) by passing through an overtaking space (108) which extends laterally at least in the direction of travel of the second motor vehicle (103), having the steps of:
• receiving at least one wind signal which represents the wind speed (101) substantially transversely to the direction of travel of the first motor vehicle (102) at a front edge of the overtaking space (108) in the direction of travel (step 302) and is measured at least at the second motor vehicle (103),
• generating the signal at least depending on the received wind signal (step 307),
wherein a signal effect which is perceptible by a driver of the first motor vehicle (102) is generated on the basis of the signal generated and is used to convey, to the driver, a suitable time for exiting a slipstream of the second motor vehicle at the edge of the overtaking space (108), **characterized in that** the signal is generated when the wind signal has a minimum value and/or a trend to minimum values in a predefinable manner.

2. Method according to Claim 1, **characterized in that** the passage through the overtaking space (108) is detected by means of a GPS and/or by means of a wind sensor mounted on the first motor vehicle (102).

3. Method according to one of the preceding claims, **characterized in that** at least one third motor vehicle (104, 105) is driving in front of the second motor vehicle (103) and at least one second received wind signal is measured at least at the third motor vehicle (104, 105).

4. Method according to Claim 3, **characterized in that** the wind signals measured at the second and third motor vehicle (103, 104, 105) for generating the signal are compared in a predefinable manner.

5. Method according to Claim 4, **characterized in that** the wind signals measured at the second and third motor vehicle (103, 104, 105) for generating the signal are compared based on a predefinable location (106) (step 306).

6. Method according to Claim 5, **characterized in that** the location (106) is predefined as the location at which the first motor vehicle (102) can pass the second motor vehicle (103) at the earliest possible time,
wherein, in particular, provision is made for the location (106) to be determined taking into account
• the maximum permitted and/or achievable longitudinal speed of the first motor vehicle (102) and/or
• the speed currently driven by the first motor vehicle (102) (step 304).

7. Device for generating a signal influencing an overtaking manoeuvre of a first motor vehicle (102), wherein the first motor vehicle (102) overtakes a second motor vehicle (103) by passing through an overtaking space (108) which extends laterally at least in the direction of travel of the second motor vehicle (103), having
• a receiving unit for receiving at least one wind signal which represents the wind speed (101) substantially transversely to the direction of travel of the first motor vehicle (102) at a front edge of the overtaking space in the direction of travel and is measured at least at the second motor vehicle (103),
• a generating unit for generating the signal at least depending on the received wind signal,
wherein the device is designed to generate, on the basis of the signal generated, a signal effect which is perceptible by a driver of the first motor vehicle (102) and is used to convey, to the driver, a suitable time for exiting a slipstream of the second motor vehicle (103) at the edge of the overtaking space (108), **characterized in that** the signal is generated when the wind signal has a minimum value and/or a trend to minimum values in a predefinable manner.

8. Device according to Claim 7, **characterized in that** at least one third motor vehicle (103, 104, 105) is driving in front of the second motor vehicle (103) and at least one second received wind signal is measured at least at the third motor vehicle (103, 104, 105).

9. Device according to Claim 8, **characterized in that** the wind signals measured at the second and third motor vehicle (103, 104, 105) for generating the signal are compared,
wherein, in particular, provision is made for the wind signals measured at the second motor vehicle (103) for generating the signal to be compared with the wind signals measured at the third motor vehicle (104, 105) based on a predefinable location (106).

## Revendications

1. Procédé permettant de générer un signal influant sur un processus de dépassement d'un premier véhicule automobile (102), le premier véhicule automobile (102) dépassant un deuxième véhicule automobile (103) en passant par un espace de dépassement (108) qui s'étend latéralement au moins dans le sens de la marche du deuxième véhicule automobile (103), comprenant les étapes consistant à :
• recevoir au moins un signal de vent qui représente la vitesse du vent (101) substantiellement transversalement au sens de la marche du premier véhicule automobile (102) au niveau d'un bord avant dans le sens de la marche de l'espace de dépassement (108) (étape 302) et qui est mesuré au moins au niveau du deuxième véhicule automobile (103),
• générer le signal au moins en fonction du signal de vent reçu (étape 307),
dans lequel, en fonction du signal généré, un effet de signal perceptible par un conducteur du premier véhicule automobile (102) est généré qui permet de transmettre au conducteur un instant approprié pour quitter le sillage du deuxième véhicule automobile au bord de l'espace de dépassement (108), **caractérisé en ce que** le signal est généré lorsque le signal de vent présente une valeur minimale et/ou présente de manière prédéfinissable une tendance vers des valeurs minimales.

2. Procédé selon la revendication 1, **caractérisé en ce que** le passage par l'espace de dépassement (108) est détecté au moyen d'un GPS et/ou au moyen d'un capteur de vent fixé au premier véhicule automobile (102).

3. Procédé selon l'une quelconque des revendications précédentes, **caractérisé en ce qu'**au moins un troisième véhicule automobile (104, 105) précède le deuxième véhicule automobile (103), et au moins un deuxième signal de vent reçu est mesuré au moins au niveau du troisième véhicule automobile (104, 105).

4. Procédé selon la revendication 3, **caractérisé en ce que** les signaux de vent mesurés au niveau du deuxième et du troisième véhicule automobile (103, 104, 105) sont comparés de manière prédéfinissable pour générer le signal.

5. Procédé selon la revendication 4, **caractérisé en ce que** les signaux de vent mesurés au niveau du deuxième et du troisième véhicule automobile (103, 104, 105) sont comparés par rapport à un emplacement prédéfinissable (106) pour générer le signal (étape 306).

6. Procédé selon la revendication 5, **caractérisé en ce que** l'emplacement (106) est prédéfini comme un emplacement où le premier véhicule automobile (102) peut le plus tôt possible passer devant le deuxième véhicule automobile (103),
dans lequel il est prévu en particulier que l'emplacement (106) soit déterminé en tenant compte
• de la vitesse longitudinale du premier véhicule automobile (102) admissible maximale et/ou à réaliser, et/ou
• de la vitesse de conduite actuelle du premier véhicule automobile (102) (étape 304).

7. Dispositif permettant de générer un signal influant sur un processus de dépassement d'un premier véhicule automobile (102), le premier véhicule automobile (102) dépassant un deuxième véhicule automobile (103) en passant par un espace de dépassement (108) qui s'étend latéralement au moins dans le sens de la marche du deuxième véhicule automobile (103), comprenant
• une unité de réception pour recevoir au moins un signal de vent qui représente la vitesse du vent (101) substantiellement transversalement au sens de la marche du premier véhicule automobile (102) au niveau d'un bord avant dans le sens de la marche de l'espace de dépassement et qui est mesuré au moins au niveau du deuxième véhicule automobile (103),
• une unité de génération pour générer le signal au moins en fonction du signal de vent reçu,
dans lequel le dispositif est réalisé pour générer, en fonction du signal généré, un effet de signal perceptible par un conducteur du premier véhicule automobile (102) qui permet de transmettre au conducteur un instant approprié pour quitter le sillage du deuxième véhicule automobile (103) au bord de l'espace de dépassement (108), **caractérisé en ce que** le signal est généré lorsque le signal de vent présente une valeur minimale et/ou présente de manière prédéfinissable une tendance vers des valeurs minimales.

8. Dispositif selon la revendication 7, **caractérisé en ce qu'**au moins un troisième véhicule automobile (103, 104, 105) précède le deuxième véhicule automobile (103) et au moins un deuxième signal de vent reçu est mesuré au moins au niveau du troisième véhicule automobile (103, 104, 105).

9. Dispositif selon la revendication 8, **caractérisé en ce que** les signaux de vent mesurés au niveau du deuxième et du troisième véhicule automobile (103, 104, 105) sont comparés pour générer le signal,
dans lequel il est prévu en particulier que les signaux de vent mesurés au niveau du deuxième véhicule automobile (103) soient comparés avec les signaux de vent mesurés au niveau du troisième véhicule automobile (104, 105) par rapport à un emplacement prédéfinissable (106) pour générer le signal.
